# EUROPEAN PATENT SPECIFICATION

(11) **EP 2 290 574 B1**
(45) Date of publication and mention of the grant of the patent: **26.09.2018**
(21) Application number: 09010866.3
(22) Date of filing: 25.08.2009
(51) Int. Cl.: G06F 21/00, G06F 21/57

(54) **Security management methods for computer devices**
Sicherheitsverwaltungsverfahren für Computervorrichtungen
Procédé de gestion de sécurité pour appareils informatiques

(43) Date of publication of application: 02.03.2011
(73) Proprietor: Giga-Byte Technology Co., Ltd., New Taipei City 231 (TW)
(72) Inventor: Chung, Chleh-Fu, Hsin-Tien, Taipei Hsien (TW)
(74) Representative: Becker Kurig Straus

(56) References cited:
- WO-A1-02/21763
- US-A1- 2002 174 353
- US-A1- 2009 064 316

## Description

### BACKGROUND

### 1. Field of the Invention

The present invention relates to a management method for a computer device, and more particularly to a management method for the security of the computer device.

### 2. Description of the Related Art

For managing securities of computer devices, conventional computer lock devices are mainly divided into a hardware lock technology and a software lock technology. The hardware lock technology needs additional devices (such as interface cards or smart cards) and corresponding installing processes. Although the hardware lock technology has a high security thereof, the additional devices and installing processes will consume more cost. On the other hand, the software lock technology employs external storage devices (such as USB flash disks) to storage certificates, and the operation system thereof will verify whether the certificates are valid after starting the operation system. Although the software lock technology is convenient in use and the cost thereof is low, but it is easy to be broken. For example, the software lock can be broken by changing power-on disks of the computer devices or entering the safe mode in the Microsoft Windows system.

WO 02/21763 A1 discloses a method and a system using an authenticating device to secure a computer and its memory components from improper access. The system relies on external parties for authentication.

Therefore, what is needed is providing a management method for a security of a computer, which is convenient in use, has a low cost and provide a high security.

### BRIEF SUMMARY

A management method in accordance with an exemplary embodiment of the present invention is adapted for a computer device. The management method comprises: turning on a power source of the computer device; performing a power-on verification procedure by a BIOS of the computer; determining whether passing through a power-on verification according to a result of performing the power-on verification procedure; starting an OS of the computer device if passing through the power-on verification; and crashing the computer device if not passing through the power-on verification.

In some exemplary embodiment of the present invention, the management method further comprises: performing a monitoring verification procedure after starting the OS; determining whether passing through a monitoring verification according to a result of performing the monitoring verification procedure; persistently turning on the power source of the computer device and performing the monitoring verification procedure again if passing through the monitoring verification; turning off the power source of the computer device, or locking at least one function operation of the computer device and performing the monitoring verification procedure again if not passing through the monitoring verification.

### BRIEF DESCRIPTION OF THE DRAWINGS

These and other features and advantages of the various embodiments disclosed herein will be better understood with respect to the following description and drawings, in which like numbers refer to like parts throughout, and in which:
FIG. 1 is a schematic view of a computer device and performing systems in accordance with an exemplary embodiment of the present invention.
FIG. 2 is a flow chart of a management method in accordance with an exemplary embodiment of the present invention.
FIGS. 3A and 3B are flow charts of performing a power-on verification procedure in accordance with an exemplary embodiment of the present invention.
FIGS. 4A and 4B are flow charts of performing a monitoring verification procedure in accordance with an exemplary embodiment of the present invention.
FIG. 5 is a flow chart of an operation method if not passing through the monitoring verification procedure in accordance with an exemplary embodiment of the present invention.

### DETAILED DESCRIPTION

Reference will now be made to the drawings to describe exemplary embodiments of the present management method for a security of a computer, in detail. The following description is given by way of example, and not limitation.

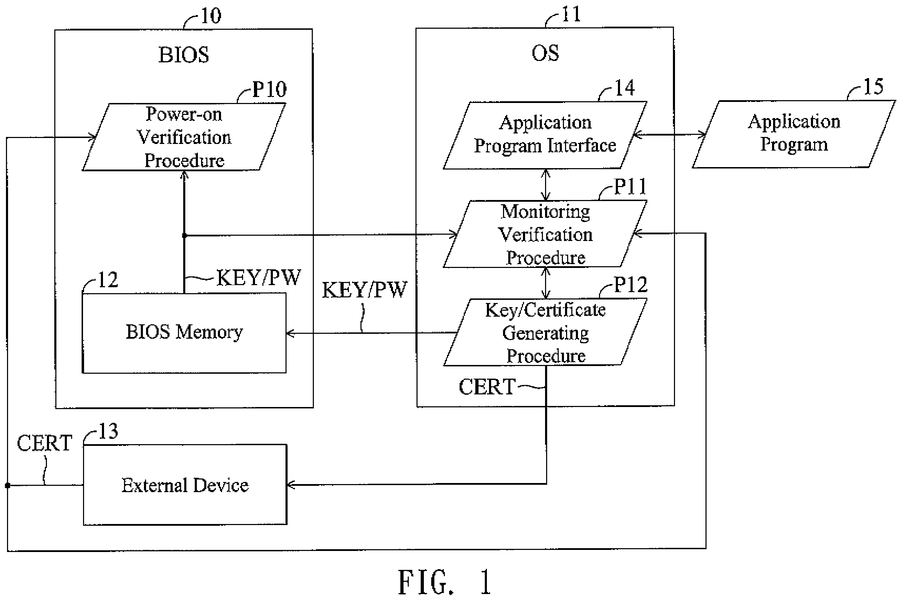

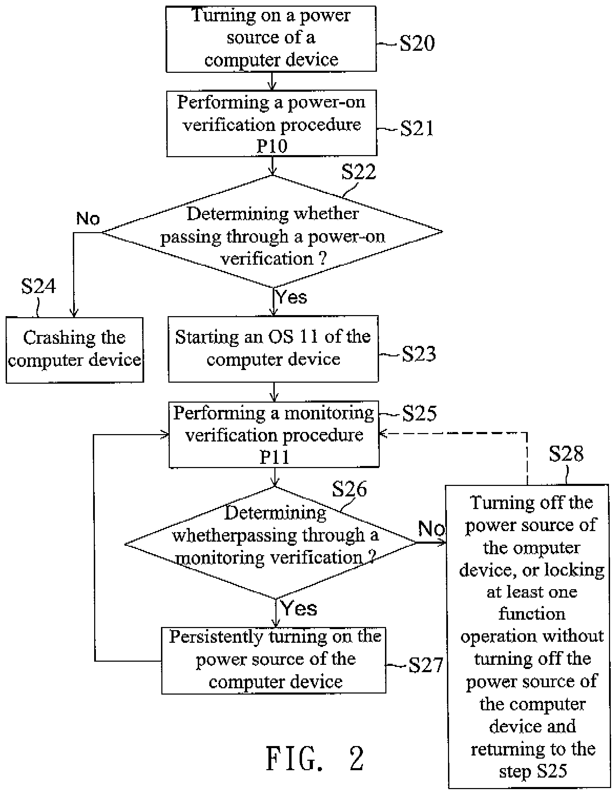

FIG. 1 is a schematic view of a computer device and performing systems in accordance with an exemplary embodiment of the present invention. Referring to FIG. 1, the computer device comprises a basic input/output system (BIOS) 10 and an operation system (OS) 11. FIG. 2 is a flow chart of a management method in accordance with an exemplary embodiment of the present invention. The following will cooperate FIGS. 1 and 2 to describe the management method of the exemplary embodiment of the present invention. Firstly, the BIOS 10 performs a power-on verification procedure P10 (a step S21) after turning on a power source of the computer device (a step S20). Then the BIOS 10 determines whether passing through a power-on verification according to a result of performing the power-on verification procedure P10 (a step S22). If passing through the power-on verification, the OS 11 of the computer device starts (a step S23); and if not passing through the power-on verification, the computer device crashes (a step S24). After starting the OS 11, the OS 11 performs a monitoring verification procedure P11 (a step S25). Then the OS 11 determines whether passing through the monitoring verification according to a result of performing the monitoring verification procedure P11 (a step S26). If passing through the monitoring verification, the power source of the computer device is persistently turned on (a step S27), and the OS 11 performs the monitoring verification procedure P11 again (the step S25). In this exemplary embodiment, the OS 11 can persistently or periodically perform the monitoring verification procedure P11. If not passing through the monitoring verification, the power source of the computer device is turned off, or the OS 11 locks at least one function operation without turning off the power source (a step S28) and the monitoring verification procedure P11 is repeated persistently or periodically (the step S25). In this exemplary embodiment, the function operation of the computer device may comprise a use or a supply of a keyboard a mouse, a power source of a screen, etc. For example, if not passing through the monitoring verification, the use of the keyboard and/or the mouse may be locked, and/or the power source stops supplying to the screen. The function operation of the computer device also comprises specific application programs. For example, if not passing through the monitoring verification, a browser and/or a mail software, etc., are locked.

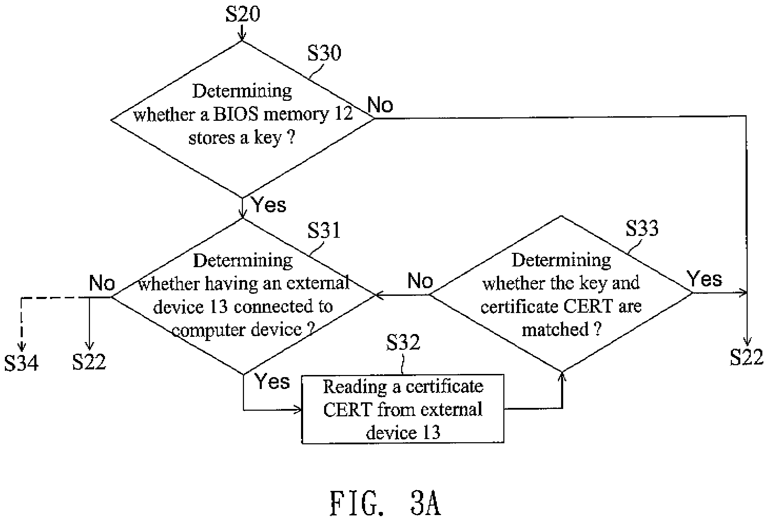

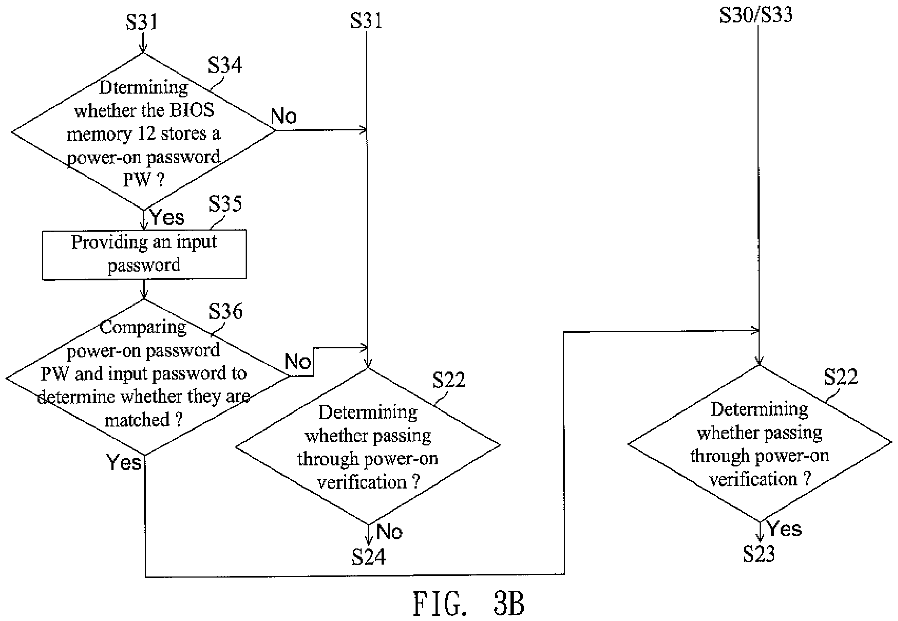

FIG. 3A and 3B are detailed flow charts of the step S21 of performing the power-on verification procedure P10 as shown in FIG. 2. Referring to FIGS. 1 and 3, after turning on the power source of the computer device, the BIOS 10 determines whether a BIOS memory 12 stores a key (a step S30). In this exemplary embodiment, if the BIOS memory 12 does not store the key, the BIOS 10 determines passing through the power-on verification in the step 22, and then starts the OS 11 of the computer device (the step S23).

If the BIOS memory 12 stores the key, the BIOS 10 then determines whether having an external device 13 connected to the computer device (a step S31). In this exemplary embodiment, the external device 13 may be a USB flash disk configured for storing a certificate CERT. The key stored in the BIOS memory 12 and the certificate stored in the external device 13 are generated by the OS 11 performing a key/certificate generating procedure P12 when the computer device previously starts the OS 11.

A performing result of the step S31 is a basis for determining whether passing through the power-on verification (the step S22). If not having the external device 13 connected to the computer device, the BIOS 12 will determine not passing through the power-on verification in the step S22, and the computer device will crash (the step S24).

If having the external device 13 connected to the computer device, the certificate CERT stored therein is read from the external device 13 (a step S32). After reading the certificate CERT stored in the external device 13, the BIOS 10 compares the key and the certificate CERT to determine whether the key and the certificate CERT are matched (a step S33). A performing result of the step S33 is another basis for determining whether passing through the power-on verification (the step S22) in FIG. 2. If the key is matched with the certificate CERT, the BIOS 10 determines passing through the power-on verification in the step S22, and then starts the OS 11 of the computer device (the step S23). If the key is not matched with the certificate CERT, the step S31 is returned, and the BIOS 10 determines whether having another external device which is connected to the computer device and has not been read the certificate. If having the external device 13 which is connected to the computer device and has not been read, the step S32 and S33 are repeated.

In this exemplary embodiment, if the step S31 determines not having any external device connected to the computer device after performing the step S30, or if the step S31 determines not having the external device which is connected to the computer device and has not been read the certificate after performing the step S33, the BIOS 10 determines not passing through the power-on verification in the step S22, and then the computer device crashes (the step S24).

In another exemplary embodiment, if the step S31 determines not having any external device connected to the computer device, or determines not having the external device which is connected to the computer device and has not been read the certificate, the BIOS 10 may determine whether the BIOS memory 12 stores a power-on password PW (a step S34). A performing result of the step S34 is used as other basis for determining whether passing through the power-on verification (the step S22). If the BIOS memory 12 does not store the power-on password PW, the BIOS 10 determines not passing through the power-on verification procedure P10 in the step S22, and the computer device crashes (the step S24).

If the BIOS memory 12 stores the power-on password PW, it will ask users to provide an input password via an input interface (a step S35). Then the BIOS 10 compares the power-on password PW and the input password to determine whether the two passwords are matched (a step S36). A performing result of the step S36 is used as another basis for determining whether passing through the power-on verification (the step S22). If the power-on password PW and the input password are matched, the BIOS 10 determines passing through the power-on verification in the step S22, and then starts the OS 11 of the computer device (the step S23). If the power-on password PW and the input password are not matched, the BIOS 10 determines not passing through the power-on verification in the step S22 and the computer device crashes (the step S24). In this exemplary embodiment, if the OS 11 starts since the power-on password PW and the input password are matched, the OS 11 will determine the users providing the input password has a low permission and lock at least one function operation of the computer device although the OS 11 starts.

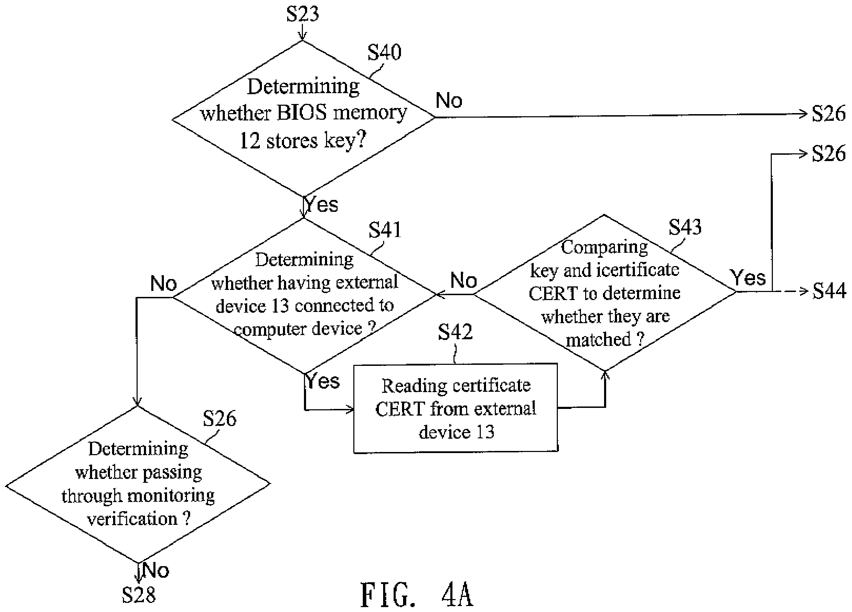

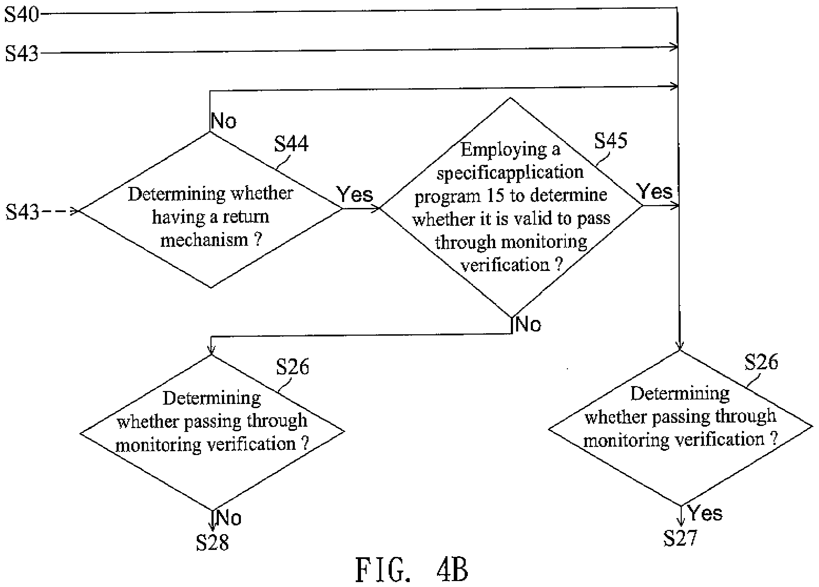

FIG. 4A and 4B are detailed flow charts of the step S25 of performing the monitoring verification procedure P11 as shown in FIG. 2. Referring to FIGS. 1 and 4A-4B, after starting the OS 11, the OS 11 determines whether the BIOS memory 12 stores the key (a step S40). In this exemplary embodiment, in the condition that the step S30 of FIGS. 3A and 3B determines the BIOS memory 12 does not store the key to further start the OS 11, the BIOS 12 does not store the key at this moment. The OS 11 determines passing through the monitoring verification in the step S26, then the power source of the computer device is persistently turned on (the step S27), and the OS 11 performs the monitoring verification procedure P11 again (the step S25).

If the BIOS memory 12 stores the key, the OS 11 determines whether having the external device 13 connected to the computer device (a step S41). A performing result of the step S41 is a basis for determining whether passing through the monitoring verification (the step S26). If not having the external device 13 connected to the computer device, the OS 11 determines not passing through the monitoring verification in the step S26 and turns off the power source of the computer device. Alternatively, the OS 11 does not turn off the power source of the computer device, and locks at least one function operation of the computer device (the step S28) and performs the monitoring verification procedure P11 again (the step S25).

If having the external device 13 connected to the computer device, the certificate CERT stored in the external device 13 are read (a step S42). After reading the certificate CERT stored in the external device 13, the OS 10 compares the key and the certificate CERT to determine whether the key and the certificate CERT are matched (a step S43). A performing result of the step S43 is another basis to determine whether passing through the monitoring verification. If the key and the certificate CERT are matched, the OS 11 determines passing through the monitoring verification in the step S26 and persistently turns on the power source of the computer device (the step S27). Furthermore, the OS 11 performs the monitoring verification procedure P11 again (the step S25). In this exemplary embodiment, when at least one function operation of the computer device has been locked which is described in the above, if determining passing through the monitoring verification, the power source of the computer device is persistently turned on in the step 27 and the locked function operation is unlocked.

If the key and the certificate CERT are not matched, the step S41 is returned. The OS 11 determines whether having an external device which is connected to the computer device and has not been read the certificate thereof. If having the external device which is connected to the computer device and has not been read the certificate thereof, the step S42 and the step S43 are repeated.

In this exemplary embodiment, if the step S41 determines not having any external device connected to the computer device after performing the step S40, or the step S41 determines not having the external device which is connected to the computer device and has not been read the certificate thereof after performing the step S43, the BIOS 10 determines not passing through the monitoring verification in the step S26. Then, the power source of the computer device is turned off. Alternatively, the power source of the computer device is not turned off and the OS 11 locks at least one function operation of the computer device (the step S28) and performs the monitoring verification procedure P11 again (the step S25).

In some exemplary embodiments, some application programs of the OS 11, such as a timing lock program, are performed according to a performing result of whether passing through the monitoring verification. The users may set it is valid passing through the monitoring verification procedure P11 via an application program interface 14 when a time of keeping starting the OS 11 exceeds a predetermined time-length if passing through the monitoring verification. Therefore, when the time of keeping starting the OS 11 exceeds the predetermined time-length, the timing lock program determines overtime, and locks a part of function operations of the computer device.

Referring to FIGS. 1 and 4A-4B, if the step S43 determines the key and the certificate CERT are not matched, the OS 11 determines whether having a return function (a step S44). If not having the return function, the OS 11 determines passing through the monitoring verification in the step S26. Then the power source of the computer device is persistently turned on (the step S27), and the OS performs the monitoring verification procedure P11 again (the step S25).

If having the return function, a specific application program 15 is used to determine whether it is valid to pass through the monitoring verification (a step S45). If it is valid to pass through the monitoring verification, the OS 11 determines passing through the monitoring verification in the step S11. Then the power source of the computer device is persistently turned on (the step S27) and the OS 11 performs the monitoring verification procedure P11 again (the step S25). If it is not valid to pass through the monitoring verification, the OS 11 determines not passing through the monitoring verification in the step S26, and the power source of the computer device is turned off. Alternatively, the power source of the computer device is not turned off, and the OS 11 locks at least one function operation of the computer device (the step S28) and performs the monitoring verification procedure P11 again (the step S25).

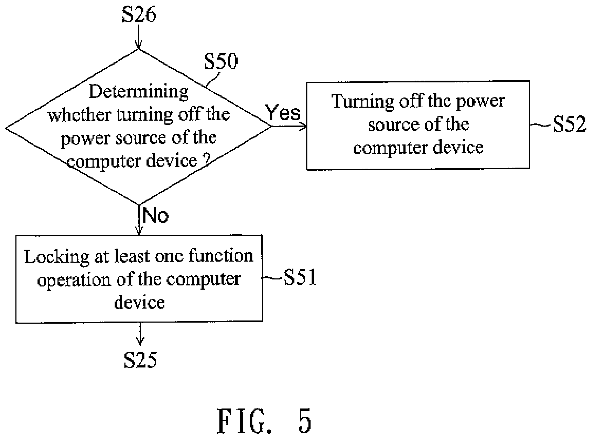

FIG. 5 is a detailed flow chart of the step S28 as shown in FIG. 2. Referring to FIGS. 2 and 5, the OS 11 determines not passing through the monitoring verification in the step S26, and the step S28 enters. Firstly, the OS 11 determines whether turning off the power source of the computer device (a step S50). If not turning off the power source of the computer device, the OS 11 locks at least one function operation of the computer device and performs the monitoring verification procedure P11 again (a step S51). On the contrary, the power source of the computer device is turned off (a step S52).

In this exemplary embodiment, when not passing through the monitoring verification procedure P11, the application program can set to lock any function operation via the application program interface 14.

In summary, after starting the power source of the computer device, firstly, the BIOS 10 performs the power-on verification procedure P10 to manage the security of the computer device. If not passing through the power-on verification procedure P10, the OS 11 can not be started and can not be entered even if changing the power-on disk. In addition, the key is stored in the BIOS memory 12 and is difficult to be filched or altered. Therefore the management method of the exemplary embodiment of the present invention provides a high security of the computer device. In addition, the external device is used to store the certificate CERT, thus the management method is convenient and has a low cost for the users.

The above description is given by way of example, and not limitation. Given the above disclosure, the various features of the embodiments disclosed herein can be used alone, or in varying combinations with each other and are not intended to be limited to the specific combination described herein. Thus, the scope of the claims is not to be limited by the illustrated embodiments.

## Claims

1. A management method for a computer device, comprising:
turning on a power source of the computer device;
performing a power-on verification procedure (P10) by a basic input/output system, BIOS, (10) of the computer device;
determining whether passing through a power-on verification according to a result of performing the power-on verification procedure (P10);
starting an operation system, OS, (11) of the computer device if passing through the power-on verification;
crashing the computer device if not passing through the power-on verification,
performing a monitoring verification procedure (P11) after starting the OS (11);
determining whether passing through a monitoring verification according to a performing result of the monitoring verification procedure (P11);
persistently turning on the power source of the computer device and performing the monitoring verification procedure (P11) again if passing through the monitoring verification procedure (P11); and
turning off the power source of the computer device or locking at least one function operation of the computer device and performing the monitoring verification procedure (P11) again if not passing through the monitoring verification,
wherein the step of performing the power-on verification procedure (P10) comprises:
determining whether a BIOS memory (12) of the computer device stores a key;
determining whether having an external device (13) connected to the computer device if the BIOS memory (12) stores the key, wherein the external device (13) is a USB flash disk and stores a certificate, wherein the key and the certificate are generated by a key/certificate generating procedure (P12) performed by the OS (11), and the key/certificate generating procedure (P12) is performed when the computer device previously starts the OS (11);
reading the certificate from the external device (13) if having the external device (13) connected to the computer device; and
comparing the key and the certificate to determine whether the key and the certificate are matched, wherein a performing result of determining whether the key and the certificate are matched, is a basis for determining whether passing through the power-on verification procedure (P10).

2. The management method as claimed in claim 1, wherein the step of determining whether passing through the power-on verification comprises:
determining passing through the power-on verification if the key and the certificate are matched.

3. The management method as claimed in claim 1, wherein the step of performing the power-on verification procedure (P10) further comprises:
determining whether having another external device (13) connected to the computer device if the key and the certificate, wherein the another external device (13) stores another certificate;
reading the another certificate from the another external device (13) if having the another external device (13) connected to the computer device; and
comparing the key and the another certificate to determine whether the key and the another certificate are matched.

4. The management method as claimed in claim 3, wherein the step of determining whether passing through the power-on verification comprises:
determining not passing through the power-on verification if not having the another external device (13) connected to the computer device.

5. The management method as claimed in claim 1, wherein the step of determining whether passing through the power-on verification comprises:
determining not passing through the power-on verification if not having the external device (13) connected to the computer device.

6. The management method as claimed in claim 1, wherein the step of performing the power-on verification procedure (P10) further comprises:
determining whether the BIOS memory (12) stores a power-on password if not having the external device (13) connected to the computer device;
providing an input password if having the power-on password; and
comparing the power-on password and the input password to determine whether the power-on password and the input password are matched.

7. The management method as claimed in claim 6, wherein the step of determining whether passing through the power-on verification comprises:
determining passing through the power-on verification if the power-on password and the input password are matched; and
determining not passing through the power-on verification if the power-on password and the input password are not matched.

8. The management method as claimed in claim 6, wherein the step of determining whether passing through the power-on verification comprises:
determining not passing through the power-on verification if not having the power-on password.

9. A management method for a computer device, comprising turning on a power source of the computer device;
performing a power-on verification procedure (P10) by a basic input/output system, BIOS, (10) of the computer device;
determining whether passing through a power-on verification according to a result of performing the power-on verification procedure (P10);
starting an operation system, OS, (11) of the computer device if passing through the power-on verification and crashing the computer device if not passing through the power-on verification;
performing a monitoring verification procedure (P11) after starting the OS (11);
determining whether passing through a monitoring verification according to a performing result of the monitoring verification procedure (P11);
persistently turning on the power source of the computer device and performing the monitoring verification procedure (P11) again if passing through the monitoring verification procedure (P11); and
turning off the power source of the computer device or locking at least one function operation of the computer device and performing the monitoring verification procedure (P11) again if not passing through the monitoring verification,
wherein the step of performing the monitoring verification procedure (P11) comprises:
determining whether a memory of the computer device stores a key;
determining whether having an external device (13) connected to the computer device if the memory stores the key, wherein the external device (13) is a USB flash disk and stores a certificate;
reading the certificate from the external device (13) if having the external device (13) connected to the computer device; and
comparing the key and the certificate to determine whether the key and the certificate are matched.

10. The management method as claimed in claim 9, wherein the step of turning off the power source of the computer device or locking the at least one function operation of the computer device comprises:
determining whether turning off the power source of the computer device; and
locking the at least one function operation and performing the monitoring verification procedure (P11) again if not turning off the power source of the computer device.

11. The management method as claimed in claim 9, wherein the step of determining whether passing through the monitoring verification comprises:
determining passing through the power-on verification if the key and the certificate are matched.

12. The management method as claimed in claim 9, wherein the step of performing the monitoring verification procedure (P11) comprises:
determining whether having another external device (13) connected to the computer device if the key and the certificate are not matched, wherein the another external device (13) stores another certificate;
reading the another certificate from the another external device (13) if having the another external device (13) connected to the computer device; and
comparing the key and the another certificate to determine whether the key and the another certificate are matched.

13. The management method as claimed in claim 12, wherein the step of determining whether passing through the monitoring verification comprises:
determining not passing through the monitoring verification if not having the another external device (13) connected to the computer device.

14. The management method as claimed in claim 9, wherein the step of determining whether passing through the monitoring verification comprises:
determining not passing through the monitoring verification if not having the external device (13) connected to the computer device.

15. The management method as claimed in claim 9, wherein the step of persistently turning on the power source of the computer device further comprises:
When the at least one function operation of the computer device has been locked in the above, unlocking the at least one locked function operation if passing through the monitoring verification.

16. The management method as claimed in claim 9, wherein the step of performing the monitoring verification procedure (P11) further comprises:
determining whether having a return mechanism if passing through the monitoring verification;
employing an application program to determine whether it is valid to pass through the monitoring verification if having the return mechanism, wherein if the application program determine it is valid to pass through the monitoring verification, the step of determining whether passing through the monitoring verification determines passing through the monitoring verification, and if the application program determines it is invalid, the step of determining whether passing through the monitoring verification determines not passing through the monitoring verification; and
determining passing through the monitoring verification in the step of determining whether passing through the monitoring verification if not having the return mechanism.

## Patentansprüche

1. Managementverfahren für eine Computervorrichtung, umfassend:
Anschalten einer Stromquelle der Computervorrichtung;
Durchführen einer Stromanschaltverifikationsprozedur (P10) durch ein Basic-Input-Output-System, BIOS, (10) der Computervorrichtung;
Bestimmen, ob eine Stromanschaltverifikation bestanden ist, gemäß einem Resultat des Durchführens der Stromanschaltverifikationsprozedur (P10);
Starten eines Betriebssystems, OS, (11) der Computervorrichtung, falls die Stromanschaltverifikation bestanden wurde;
zum Absturz bringen der Computervorrichtung, falls die Stromanschaltverifikation nicht bestanden wurde;
Durchführen einer Überwachungsverifikationsprozedur (P11) nach dem Starten des OS (11);
Bestimmen, ob eine Überwachungsverifikation bestanden ist, gemäß einem Durchführungsergebnis der Überwachungsverifikationsprozedur (P11);
andauernd Anschalten der Stromquelle der Computervorrichtung und nochmaliges Durchführen der Überwachungsverifikationsprozedur (P11), falls die Überwachungsverifikationsprozedur (P11) bestanden wurde; und
Ausschalten der Stromquelle der Computervorrichtung oder Sperren wenigstens einer Funktionsoperation der Computervorrichtung und nochmaliges Durchführen der Überwachungsverifikationsprozedur (P11), falls die Überwachungsverifikation nicht bestanden wurde,
wobei der Schritt des Durchführens der Stromanschaltverifikationsprozedur (P10) umfasst:
Bestimmen, ob ein BIOS-Speicher (12) der Computervorrichtung einen Schlüssel speichert;
Bestimmen, ob eine externe Vorrichtung (13) mit der Computervorrichtung verbunden ist, falls der BIOS-Speicher (12) den Schlüssel speichert, wobei die externe Vorrichtung (13) eine USB-Flashplatte ist und ein Zertifikat speichert, wobei der Schlüssel und das Zertifikat durch eine Schlüssel/Zertifikat-Erzeugungsprozedur (P12) erzeugt werden, die durch das OS (11) durchgeführt wird, und die Schlüssel/Zertifikat-Erzeugungsprozedur (P12) durchgeführt wird, wenn die Computervorrichtung zuvor das OS (11) startet;
Lesen des Zertifikats von der externen Vorrichtung (13), falls die externe Vorrichtung (13) mit der Computervorrichtung verbunden ist; und
Vergleichen des Schlüssels und des Zertifikats, um zu bestimmen, ob der Schlüssel und das Zertifikat zusammenpassen, wobei ein Durchführungsresultat des Bestimmens, ob der Schlüssel und das Zertifikat zusammenpassen, eine Basis ist zum Bestimmen, ob die Stromanschaltverifikationsprozedur (P10) bestanden wurde.

2. Managementverfahren gemäß Anspruch 1, wobei der Schritt des Bestimmens, ob die Stromanschaltverifikation bestanden wurde, umfasst:
Bestimmen, dass die Stromanschaltverifikation bestanden wurde, falls der Schlüssel und das Zertifikat zusammenpassen.

3. Managementverfahren gemäß Anspruch 1, wobei der Schritt des Durchführens der Stromanschaltverifikationsprozedur (P10) weiterhin umfasst:
Bestimmen, ob eine weitere externe Vorrichtung (13) mit der Computervorrichtung verbunden ist, falls der Schlüssel und das Zertifikat, wobei die weitere externe Vorrichtung (13) ein weiteres Zertifikat speichert;
Lesen des weiteren Zertifikats von der weiteren externen Vorrichtung (13), falls die weitere externe Vorrichtung (13) mit der Computervorrichtung verbunden ist; und
Vergleichen des Schlüssels mit dem weiteren Zertifikat, um zu bestimmen, ob der Schlüssel und das weitere Zertifikat zusammenpassen.

4. Managementverfahren gemäß Anspruch 3, wobei der Schritt des Bestimmens, ob die Stromanschaltverifikation bestanden wurde, umfasst:
Bestimmen, dass die Stromanschaltverifikation nicht bestanden wurde, falls die weitere externe Vorrichtung (13) nicht mit der Computervorrichtung verbunden ist.

5. Managementverfahren gemäß Anspruch 1, wobei der Schritt des Bestimmens, ob die Stromanschaltverifikation bestanden wurde, umfasst:
Bestimmen, dass die Stromanschaltverifikation nicht bestanden wurde, falls die externe Vorrichtung (13) nicht mit der Computervorrichtung verbunden ist.

6. Managementverfahren gemäß Anspruch 1, wobei der Schritt des Durchführens der Stromanschaltverifikationsprozedur (P10) weiterhin umfasst:
Bestimmen, ob der BIOS-Speicher (12) ein Strom-An-Passwort speichert, falls die externe Vorrichtung (13) nicht mit der Computervorrichtung verbunden ist;
Bereitstellen eines Eingabepassworts, falls das Strom-An-Passwort vorliegt; und
Vergleichen des Strom-An-Passworts und des Eingabepassworts, um zu bestimmen, ob das Strom-An-Passwort und das Eingabepasswort zusammenpassen.

7. Managementverfahren gemäß Anspruch 6, wobei der Schritt des Bestimmens, ob die Stromanschaltverifikation bestanden wurde, umfasst:
Bestimmen, dass die Stromanschaltverifikation bestanden wurde, falls das Strom-An-Passwort und das Eingabepasswort zusammenpassen; und
Bestimmen, dass die Stromanschaltverifikation nicht bestanden wurde, falls das Strom-An-Passwort und das Eingabepasswort nicht zusammenpassen,

8. Managementverfahren gemäß Anspruch 6, wobei der Schritt des Bestimmens, ob die Stromanschaltverifikation bestanden wurde, umfasst:
Bestimmen, dass die Stromanschaltverifikation nicht bestanden wurde, falls das Strom-An-Passwort nicht vorliegt.

9. Managementverfahren für eine Computervorrichtung, umfassend:
Anschalten einer Stromquelle der Computervorrichtung;
Durchführen einer Stromanschaltverifikationsprozedur (P10) durch ein Basic-Input-Output-System, BIOS, (10) der Computervorrichtung;
Bestimmen, ob eine Stromanschaltverifikation bestanden ist, gemäß einem Resultat des Durchführens der Stromanschaltverifikationsprozedur (P10);
Starten eines Betriebssystems, OS, (11) der Computervorrichtung, falls die Stromanschaltverifikation bestanden wurde und zum Absturz bringen der Computervorrichtung, falls die Stromanschaltverifikation nicht bestanden wurde;
Durchführen einer Überwachungsverifikationsprozedur (P11) nach dem Starten des OS (11);
Bestimmen, ob eine Überwachungsverifikation bestanden ist, gemäß einem Durchführungsergebnis der Überwachungsverifikationsprozedur (P11);
andauernd Anschalten der Stromquelle der Computervorrichtung und nochmaliges Durchführen der Überwachungsverifikationsprozedur (P11), falls die Überwachungsverifikationsprozedur (P11) bestanden wurde; und
Ausschalten der Stromquelle der Computervorrichtung oder Sperren wenigstens einer Funktionsoperation der Computervorrichtung und nochmaliges Durchführen der Überwachungsverifikationsprozedur (P11), falls die Überwachungsverifikation nicht bestanden wurde,
wobei der Schritt des Durchführens der Überwachungsverifikationsprozedur (P11) umfasst:
Bestimmen, ob ein Speicher der Computervorrichtung einen Schlüssel speichert;
Bestimmen, ob eine externe Vorrichtung (13) mit der Computervorrichtung verbunden ist, falls der Speicher den Schlüssel speichert, wobei die externe Vorrichtung (13) eine USB-Flashplatte ist und ein Zertifikat speichert;
Lesen des Zertifikats von der externen Vorrichtung (13), falls die externe Vorrichtung (13) mit dem Computer verbunden ist; und
Vergleichen des Schlüssels und des Zertifikats, um zu bestimmen, ob der Schlüssel und das Zertifikat zusammenpassen.

10. Managementverfahren gemäß Anspruch 9, wobei der Schritt des Ausschaltens der Stromquelle der Computervorrichtung oder Sperrens wenigstens einer Funktionsoperation der Computervorrichtung umfasst:
Bestimmen, ob die Stromquelle der Computervorrichtung ausgeschaltet wird; und
Sperren der wenigstens einer Funktionsoperation und nochmaliges Durchführen der Überwachungsverifikationsprozedur (P11), falls die Stromquelle der Computervorrichtung nicht ausgeschaltet wird.

11. Managementverfahren gemäß Anspruch 9, wobei der Schritt des Bestimmens, ob die Überwachungsverifikation bestanden wurde, umfasst:
Bestimmen, dass die Stromanschaltverifikation bestanden wurde, falls der Schlüssel und das Zertifikat zusammenpassen.

12. Managementverfahren gemäß Anspruch 9, wobei der Schritt des Durchführens der Überwachungsverifikationsprozedur (P11) weiterhin umfasst:
Bestimmen, ob eine weitere externe Vorrichtung (13) mit der Computervorrichtung verbunden ist, falls der Schlüssel und das Zertifikat nicht zusammenpassen, wobei die weitere externe Vorrichtung (13) ein weiteres Zertifikat speichert;
Lesen des weiteren Zertifikats von der weiteren externen Vorrichtung (13), falls die weitere externe Vorrichtung (13) mit der Computervorrichtung verbunden ist; und
Vergleichen des Schlüssels mit dem weiteren Zertifikat, um zu bestimmen, ob der Schlüssel und das weitere Zertifikat zusammenpassen.

13. Managementverfahren gemäß Anspruch 12, wobei der Schritt des Bestimmens, ob die Überwachungsverifikation bestanden wurde, umfasst:
Bestimmen, dass die Überwachungsverifikation nicht bestanden wurde, falls die weitere externe Vorrichtung (13) nicht mit der Computervorrichtung verbunden ist.

14. Managementverfahren gemäß Anspruch 9, wobei der Schritt des Bestimmens, ob die Überwachungsverifikation bestanden wurde, umfasst:
Bestimmen, dass die Überwachungsverifikation nicht bestanden wurde, falls die externe Vorrichtung (13) nicht mit der Computervorrichtung verbunden ist.

15. Managementverfahren gemäß Anspruch 9, wobei der Schritt des andauernden Anschaltens der Stromquelle der Computervorrichtung weiterhin umfasst:
wenn die wenigstens eine Funktionsoperation der Computervorrichtung in dem Obigen gesperrt wurde, Entsperren der wenigstens einen Funktionsoperation, falls die Überwachungsverifikation bestanden wurde.

16. Managementverfahren gemäß Anspruch 9, wobei der Schritt des Durchführens der Überwachungsverifikationsprozedur (P11) weiterhin umfasst:
Bestimmen, ob ein Rückkehrmechanismus vorliegt, falls die Überwachungsverifikation bestanden wurde;
Ausführen eines Anwendungsprogramms, um zu bestimmen, ob es gültig ist die Überwachungsverifikation zu bestehen, falls ein Rückkehrmechanismus vorliegt, wobei,
falls das Anwendungsprogramm bestimmt, dass es gültig ist die Überwachungsverifikation zu bestehen, der Schritt des Bestimmens, ob die Überwachungsverifikation bestanden wurde, bestimmt, dass die Überwachungsverifikation bestanden wurde, und
falls das Anwendungsprogramm bestimmt, dass es ungültig ist, der Schritt des Bestimmens, ob die Überwachungsverifikation bestanden wurde, bestimmt, dass die Überwachungsverifikation nicht bestanden wurde; und
Bestimmen, dass die Überwachungsverifikation bestanden wurde in dem Schritt des Bestimmens, ob die Überwachungsverifikation bestanden wurde, falls der Rückkehrmechanismus nicht vorliegt.

## Revendications

1. Procédé de gestion pour un dispositif informatique, comprenant :
la mise sous tension d'une source d'énergie du dispositif informatique ;
l'exécution d'une procédure de vérification de mise sous tension (P10) par un système d'entrée/sortie de base, BIOS, (10) du dispositif informatique ;
la détermination si une vérification de mise sous tension est réussie en fonction d'un résultat de l'exécution de la procédure de vérification de mise sous tension (P10) ;
le démarrage d'un système d'exploitation, OS, (11) du dispositif informatique si la vérification de mise sous tension est réussie ;
l'arrêt du dispositif informatique si la vérification de mise sous tension n'est pas réussie,
l'exécution d'une procédure de vérification de surveillance (P11) après le démarrage de l'OS (11) ;
la détermination si une vérification de surveillance est réussie en fonction d'un résultat d'exécution de la procédure de vérification de surveillance (P11) ;
la mise sous tension persistante de la source d'énergie du dispositif informatique et l'exécution de la procédure de vérification de surveillance (P11) à nouveau si la procédure de vérification de surveillance (P11) est réussie ; et
la mise hors tension de la source d'énergie du dispositif informatique ou le verrouillage d'au moins une opération de fonctionnement du dispositif informatique et l'exécution de la procédure de vérification de surveillance (P11) à nouveau si la vérification de surveillance n'est pas réussie,
dans lequel l'étape de l'exécution de la procédure de vérification de mise sous tension (P10) comprend :
la détermination si une mémoire BIOS (12) du dispositif informatique mémorise une clé ;
la détermination s'il y a un dispositif externe (13) relié au dispositif informatique si la mémoire BIOS (12) mémorise la clé, dans lequel le dispositif externe (13) est un disque flash USB et mémorise un certificat, dans lequel la clé et le certificat sont générés par une procédure de génération de clé/certificat (P12) effectuée par l'OS (11), et la procédure de génération de clé/certificat (P12) est effectuée lorsque le dispositif informatique démarre préalablement l'OS (11) ;
la lecture du certificat depuis le dispositif externe (13) s'il y a le dispositif externe (13) relié au dispositif informatique ; et
la comparaison de la clé et du certificat pour déterminer si la clé et le certificat correspondent l'un à l'autre, dans lequel un résultat d'exécution de la détermination si la clé et le certificat correspondent l'un à l'autre sert de base à la détermination si la procédure de vérification de mise sous tension (P10) est réussie.

2. Procédé de gestion selon la revendication 1, dans lequel l'étape de la détermination si la vérification de mise sous tension est réussie comprend :
la détermination que la vérification de mise sous tension est réussie si la clé et le certificat correspondent l'un à l'autre.

3. Procédé de gestion selon la revendication 1, dans lequel l'étape de l'exécution de la procédure de vérification de mise sous tension (P10) comprend en outre :
la détermination s'il y a un autre dispositif externe (13) relié au dispositif informatique si la clé et le certificat correspondent l'un à l'autre, dans lequel l'autre dispositif externe (13) mémorise un autre certificat ;
la lecture de l'autre certificat depuis l'autre dispositif externe (13) s'il y a l'autre dispositif externe (13) relié au dispositif informatique ; et
la comparaison de la clé et de l'autre certificat pour déterminer si la clé et l'autre certificat correspondent l'un à l'autre.

4. Procédé de gestion selon la revendication 3, dans lequel l'étape de la détermination si la vérification de mise sous tension est réussie comprend :
la détermination que la vérification de mise sous tension n'est pas réussie s'il n'y a pas l'autre dispositif externe (13) relié au dispositif informatique.

5. Procédé de gestion selon la revendication 1, dans lequel l'étape de la détermination si la vérification de mise sous tension est réussie comprend :
la détermination que la vérification de mise sous tension n'est pas réussie s'il n'y a pas le dispositif externe (13) relié au dispositif informatique.

6. Procédé de gestion selon la revendication 1, dans lequel l'étape de l'exécution de la procédure de vérification de mise sous tension (P10) comprend en outre :
la détermination si la mémoire BIOS (12) mémorise un mot de passe de mise sous tension s'il n'y a pas le dispositif externe (13) relié au dispositif informatique ;
la fourniture d'un mot de passe d'entrée s'il y a le mot de passe de mise sous tension ; et
la comparaison du mot de passe de mise sous tension et du mot de passe d'entrée pour déterminer si le mot de passe de mise sous tension et le mot de passe d'entrée correspondent l'un à l'autre.

7. Procédé de gestion selon la revendication 6, dans lequel l'étape de la détermination si la vérification de mise sous tension est réussie comprend :
la détermination que la vérification de mise sous tension est réussie si le mot de passe de mise sous tension et le mot de passe d'entrée correspondent l'un à l'autre ; et
la détermination que la vérification de mise sous tension n'est pas réussie si le mot de passe de mise sous tension et le mot de passe d'entrée ne correspondent pas l'un à l'autre.

8. Procédé de gestion selon la revendication 6, dans lequel l'étape de la détermination si la vérification de mise sous tension est réussie comprend :
la détermination que la vérification de mise sous tension n'est pas réussie s'il n'y a pas le mot de passe de mise sous tension.

9. Procédé de gestion pour un dispositif informatique, comprenant :
la mise sous tension d'une source d'énergie du dispositif informatique ;
l'exécution d'une procédure de vérification de mise sous tension (P10) par un système d'entrée/sortie de base, BIOS, (10) du dispositif informatique ;
la détermination si une vérification de mise sous tension est réussie en fonction d'un résultat de l'exécution de la procédure de vérification de mise sous tension (P10) ;
le démarrage d'un système d'exploitation, OS, (11) du dispositif informatique si la vérification de mise sous tension est réussie et l'arrêt du dispositif informatique si la vérification de mise sous tension n'est pas réussie,
l'exécution d'une procédure de vérification de surveillance (P11) après le démarrage de l'OS (11) ;
la détermination si une vérification de surveillance est réussie en fonction d'un résultat d'exécution de la procédure de vérification de surveillance (P11) ;
la mise sous tension persistante de la source d'énergie du dispositif informatique et l'exécution de la procédure de vérification de surveillance (P11) à nouveau si la procédure de vérification de surveillance (P11) est réussie ; et
la mise hors tension de la source d'énergie du dispositif informatique ou le verrouillage d'au moins une opération de fonctionnement du dispositif informatique et l'exécution de la procédure de vérification de surveillance (P11) à nouveau si la vérification de surveillance n'est pas réussie,
dans lequel l'étape de l'exécution de la procédure de vérification de surveillance (P11) comprend :
la détermination si une mémoire du dispositif informatique mémorise une clé ;
la détermination s'il y a un dispositif externe (13) relié au dispositif informatique si la mémoire mémorise la clé, dans lequel le dispositif externe (13) est un disque flash USB et mémorise un certificat ;
la lecture du certificat depuis le dispositif externe (13) s'il y a le dispositif externe (13) relié au dispositif informatique ; et
la comparaison de la clé et du certificat pour déterminer si la clé et le certificat correspondent l'un à l'autre.

10. Procédé de gestion selon la revendication 9, dans lequel l'étape de la mise hors tension de la source d'énergie du dispositif informatique ou du verrouillage de l'au moins une opération de fonctionnement du dispositif informatique comprend :
la détermination s'il y a la mise hors tension de la source d'énergie du dispositif informatique ; et
le verrouillage de l'au moins une opération de fonctionnement et l'exécution de la procédure de vérification de surveillance (P11) à nouveau s'il n'y a pas la mise hors tension de la source d'énergie du dispositif informatique.

11. Procédé de gestion selon la revendication 9, dans lequel l'étape de la détermination si la vérification de surveillance est réussie comprend :
la détermination que la vérification de mise sous tension est réussie si la clé et le certificat correspondent l'un à l'autre.

12. Procédé de gestion selon la revendication 9, dans lequel l'étape de l'exécution de la procédure de vérification de surveillance (P11) comprend :
la détermination s'il y a un autre dispositif externe (13) relié au dispositif informatique si la clé et le certificat ne correspondent pas l'un à l'autre, dans lequel l'autre dispositif externe (13) mémorise un autre certificat ;
la lecture de l'autre certificat depuis l'autre dispositif externe (13) s'il y a l'autre dispositif externe (13) relié au dispositif informatique ; et
la comparaison de la clé et de l'autre certificat pour déterminer si la clé et l'autre certificat correspondent l'un à l'autre.

13. Procédé de gestion selon la revendication 12, dans lequel l'étape de la détermination si la vérification de surveillance est réussie comprend :
la détermination que la vérification de surveillance n'est pas réussie s'il n'y a pas l'autre dispositif externe (13) relié au dispositif informatique.

14. Procédé de gestion selon la revendication 9, dans lequel l'étape de la détermination si la vérification de surveillance est réussie comprend :
la détermination que la vérification de surveillance n'est pas réussie s'il n'y a pas le dispositif externe (13) relié au dispositif informatique.

15. Procédé de gestion selon la revendication 9, dans lequel l'étape de la mise sous tension persistante de la source d'énergie du dispositif informatique comprend en outre :
lorsque l'au moins une opération de fonctionnement du dispositif informatique a été verrouillée dans ce qui précède, le déverrouillage de l'au moins une opération de fonctionnement verrouillée si la vérification de surveillance est réussie.

16. Procédé de gestion selon la revendication 9, dans lequel l'étape de l'exécution de la procédure de vérification de surveillance (P11) comprend en outre :
la détermination s'il y a un mécanisme de retour si la vérification de surveillance est réussie ;
l'emploi d'un programme d'application pour déterminer s'il est valable que la vérification de surveillance est réussie s'il y a le mécanisme de retour, dans lequel, si le programme d'application détermine qu'il est valable que la vérification de surveillance est réussie, l'étape de la détermination si la vérification de surveillance est réussie détermine que la vérification de surveillance est réussie, et, si le programme d'application détermine qu'il n'est pas valable que la vérification de surveillance est réussie, l'étape de la détermination si la vérification de surveillance est réussie détermine que la vérification de surveillance n'est pas réussie ; et
la détermination que la vérification de surveillance est réussie à l'étape de la détermination si la vérification de surveillance est réussie s'il n'y a pas le mécanisme de retour.
